(19) Europäisches Patentamt
European Patent Office
Office européen des brevets

(11) Veröffentlichungsnummer: **0 408 693 B1**

(12) **EUROPÄISCHE PATENTSCHRIFT**

(45) Veröffentlichungstag der Patentschrift: **10.11.93**

(51) Int. Cl.[5]: **C08K 5/04**, //(C08K5/04,5:10, 5:15)

(21) Anmeldenummer: **90900140.6**

(22) Anmeldetag: **20.12.89**

(86) Internationale Anmeldenummer:
**PCT/EP89/01572**

(87) Internationale Veröffentlichungsnummer:
**WO 90/07547 (12.07.90 90/16)**

Die Akte enthält technische Angaben, die nach dem Eingang der Anmeldung eingereicht wurden und die nicht in dieser Patentschrift enthalten sind.

(54) **STABILISATORGEMISCHE FÜR KUNSTSTOFFE.**

(30) Priorität: **23.12.88 DE 3843441**

(43) Veröffentlichungstag der Anmeldung:
**23.01.91 Patentblatt 91/04**

(45) Bekanntmachung des Hinweises auf die Patenterteilung:
**10.11.93 Patentblatt 93/45**

(84) Benannte Vertragsstaaten:
**BE DE FR GB IT NL**

(56) Entgegenhaltungen:
**EP-A- 0 191 463**

**Patent Abstracts of Japan, volume 3, Nr. 14 (C-36), 8 February 1979,& JP-A 53 137 244**

**Ullmann (4), 23 643-649**

(73) Patentinhaber: **BASF Aktiengesellschaft**
**Carl-Bosch-Strasse 38**
**D-67063 Ludwigshafen(DE)**

(72) Erfinder: **TRAUTH, Hubert**
**Milanstrasse 6**
**D-6724 Dudenhofen(DE)**
Erfinder: **RADTKE, Volker**
**Barbarossastrasse 4**
**D-6733 Hassloch(DE)**
Erfinder: **NEUMANN, Peter**
**Poststrasse 28**
**D-6800 Mannheim 31(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 408 693 B1

## Beschreibung

Den Kunststoffen werden während oder vor der Verarbeitung Stabilisatoren zugesetzt, um die Kunststoffe vor Zersetzung zu schützen, wobei sich bei Verwendung von Stabilisatorgemischen bekanntlich die Wirkungen verschiedener Stabilisatorsysteme addieren können.

Aus der DE-PS 11 14 319 und 11 36 102 ist bekannt, α-Tocopherol (I) als Stabilisierungsmittel für Kunststoffe zu verwenden.

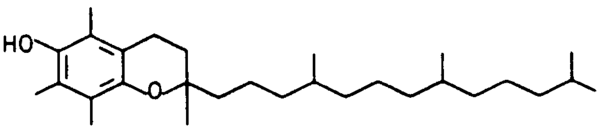

(I)

α-Tocopherol ist wegen seiner Farbe zur Stabilisierung von farblosen Kunststoffen praktisch nicht geeignet. Ein weiterer Nachteil ist, daß die mit (I) erzielte Stabilisierung nicht der mit phenolischen Stabilisatoren erzielten Stabilisierung entspricht. Aus diesem Grunde vermochte das α-Tocopherol die bisherigen handelsüblichen phenolisch Stabilisatoren nicht zu ersetzen, obwohl man dem physiologisch unbedenklichen Naturstoff α-Tocopherol an sich den Vorzug geben würde und auch die phenolischen Stabilisatoren nicht in jeder Beziehung befriedigen.

Aus der DE-OS 36 34 531 ist bekannt, daß Mischungen aus α-Tocopherol und einem organischen Phosphit oder einem organischen Phosphonit dem Kunststoff eine geringere Farbe verleihen, und daß die Stabilisierungseffekte besser als mit α-Tocopherol allein sind. Ein Nachteil dieser Gemische ist jedoch, daß diese aus der Luft zuviel Feuchtigkeit aufnehmen und dadurch hydrolisieren können.

Aufgabe der vorliegenden Erfindung war es, Stabilisatoren bereitzustellen, die im Vergleich zu den Phosphiten und Phosponiten bei gleicher Stabilisierungswirkung und Verfärbungsneigung eine geringere Wasseraufnahme und damit eine verbesserte hydrolytische Stabilität aufweisen.

Es wurde gefunden, daß Stabilisatorgemische bestehend aus

a) α-Tocopherol der Formel (I)

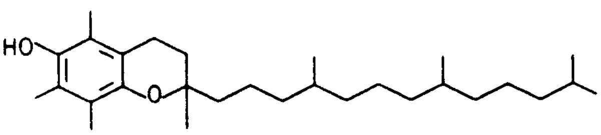

(I)

und

b) Glycerinmono-, -di und/oder -triestern von gesättigten oder ungesättigten Fettsäuren oder Gemischen davon, wobei das Verhältnis von (a):(b) = 1:5 bis 1:14 Gewichtsteile beträgt, diese Aufgabe hervorragend lösen.

Die Stabilisatoren geben in Kunststoffen eine hervorragende Stabilisierung gegen Verfärbung und Polymerabbau während der Verarbeitung und Zeigen eine geringe Wasseraufnahme und damit eine verbesserte hydrolytische Stabilität.

Die erfindungsgemäßen Stabilisatoren sind je nach der verwendeten Komponente (b) flüssige oder auch kristalline Produkte. Flüssige Produkte sind bei der Stabilisierung von Polyurethanen und speziellen Polyolefintypen bevorzugt, da hier flüssige Produkte Vorteile bei der Dosierung aufweisen.

Für (b) kommen Mono-, Di- und/oder Triester, vorzugsweise Partialester des Glycerins mit gesättigten $C_{14}$-$C_{18}$-Fettsäuren, 12-Hydroxyoctadecen-Säure und 12-Hydroxyoctadecan-Säure sowie Gemische dieser Ester in Betracht.

Als bevorzugte Ester sind im einzelnen z.B. zu nennen:
Glycerinmono- und -dioleat, Glycerinmono- und -distearat, Glycerinmono- und -dipalmitat, Glycerinmono- und dimyristat, Glycerinmono- und dilinolat, Glycerinmono- und -dilinolenat, Glycerinmono- und di-12-hydroxyoctadecanat, Glycerinmono- und -di-12-hydroxyoctadecenat.

Das Verhältnis der Komponenten (a):(b) liegt bei 1:5 bis 1:14 Gewichtsteilen bevorzugt bei 1:6 bis 1:10 Gewichtsteilen
Das erfindungsgemäße Stabilisatorgemisch wird in einer Konzentration von 0,05 bis 5, bevorzugt von 0,05 bis 1 Gew.-%, bezogen auf das zu stabilisierende Material, eingearbeitet.

Neben dem erfindungsgemäßen Stabilisatorgemisch aus (a) und (b) können dem zu stabilisierenden Material noch weitere Stabilisatoren, z.B. die für Stabilisierungszwecke bekannten Synergisten Calciumstearat und Distearylthiodipropionat ($S-CH_2CH_2-COOC_{18}H_{37})_2$) zugegeben werden.

Mit den Stabilisatorgemischen können auch zusammen mit Kunststoffen Konzentrate hergestellt werden und diese dann in die zu stabilisierenden Kunststoffe eingearbeitet werden.

Bei der Verarbeitung haben Konzentrate den Vorteil der leichteren Handhabung und leichteren Dosierung.

Als zu stabilisierende Kunststoffe kommen Thermoplaste, wie Polyvinylchlorid, Styrolpolymerisate, Polyamide, Polycarbonat, Polyphenylenoxide, Polyester, Polyolefine, vorzugsweise Polyethylen und Polypropylen, sowie Polyurethane und Duroplaste in Betracht.

Für die Eignung und Wirksamkeit von Stabilisatoren sind vor allem folgende Kriterien maßgebend:

1. Farbe

Der Kunststoff soll durch den Stabilisator nicht verfärbt werden. Diese Forderung ist für farblose Thermoplaste, Duroplaste und Polyurethane besonders wichtig.

2. Verarbeitungsstabilität

Hierunter ist die Eigenschaftskonstanz von Thermoplasten gegenüber der mechanischen und thermischen Beanspruchung bei Formgebungsverfahren wie der Extrusion und dem Spritzguß zu verstehen.

Eine Maßzahl für die Verarbeitungsstabilität läßt sich aus der Änderung des Schmelzverhaltens der betreffenden Thermoplaste nach mehrmaliger Formgebung unter Aufschmelzen ableiten (Schmelzindex-Test nach DIN 53 735).

Ein weiteres wichtiges Kriterium für die Verarbeitungsstabilität ist die Veränderung der Farbe nach mehrmaliger Formgebung unter Aufschmelzen. Diese Veränderung sollte möglichst gering sein: Yellowness-Test nach ASTMD 1925.

3. Wasseraufnahme

Der Stabilisator soll während der Lagerung wenig bzw. kein Wasser aufnehmen und somit genügend hydrolyseresistent sein. Dies Forderung ist besonders dann von Bedeutung, wenn der Stabilisator nicht im Kunststoff gelöst ist, sondern nur auf der Oberfläche haftet.

Die erfindungsgemäßen Stabilisatoren erfüllen Punkt 1 und 2 ausgezeichnet. Sie liegen auf gleichem Niveau mit den Gemischen aus α-Tocopherol und Phosphiten bzw. Phosphoniten. Hinsichtlich Punkt 3 bieten die erfindungsgemäßen Stabilisatoren besondere Vorteile gegenüber den Phosphiten und Phosphoniten des Standes der Technik.

Die Erfindung soll durch die folgenden Beispiele zusätzlich erläutert werden.

Die Stabilisator enthaltenen Polymeren wurden hinsichtlich Farbqualität, Verarbeitungsstabilität und Wasseraufnahme beurteilt.

A. Farbqualität

Diese wurde als Yellowness-Index YI angegeben, der nach dem Yellowness-Test nach ASTMD 1925 in Polypropylen bestimmt wurde.

Die angegebenen YI-Werte sind jeweils das Mittel aus zwei Messungen. Je höher diese Werte um so geringer ist die Farbqualität, d.h. um so stärker die Verfärbung.

Der Stabilisator wurde in allen Fällen in gleicher Weise in additivfreies dechloriertes Polypropylen eingearbeitet und das Material zu Granulat verarbeitet, aus dem Platten von 1 mm Schichtdicke geformt wurden. Am letzteren wurde der Yellowness-Index bestimmt.

Bei der Farbqualität entsprechen die genannten Werte denen der angegebenen visuellen Eindrücke:
bis 2 nicht erkennbare Verfärbung
3 - 5 sehr schwache Verfärbung
5 - 10 schwache, aber bereits deutlich erkennbare Verfärbung
10 - 20 merkliche Verfärbung
> 20 starke Verfärbung

B. Verarbeitungsstabilität

Diese wurde an gleichem Polypropylen (wie bei (A)) in folgender Weise bestimmt: Das Gemisch wurde extrudiert und granuliert. An dieser einmal extrudierten Probe wurde der Schmelzindex nach DIN 53 735 bestimmt: $MFI_1$. Diese Probe wurde dann noch 7 mal extrudiert und granuliert und an diesem Produkt dann der Schmelzindex wie oben bestimmt: $MFI_8$.

Aus den Schmelzindices wurde der Quotient

$$\frac{MFI_8}{MFI_1}$$

gebildet

Je größer der Quotient ist, umso geringer ist die Verarbeitungsstabilität.

Weiterhin wurde an den Proben nach einmaligem und achtmaligem Extrudieren und Granulieren der Yellowness-Index $YI_1$ und $YI_8$ nach (A) bestimmt.

C. Wasseraufnahme

Die Wasseraufnahme wurde an dem 100%igen Stabilisatorgemisch bestimmt. Bei einer relativen Luftfeuchte von 98 % und einer Temperatur von 22 °C im Exsikkator wurde die Gewichtszunahme in Abhängigkeit der Lagerzeit bestimmt.

Beispiele 1 bis 4

In additivfreiem dechloriertem Polypropylen wurde die in Tabelle 1 angegebenen Stabilisatorgemische in der angegebenen Menge durch Extrusion eingearbeitet und die Masse granuliert.

An dem Granulat wurde nach (A) der Yellowness-Index und nach (B) der Schmelzindex nach einmaligem und achtmaligem Extrudieren bestimmt. Die Meßergebnisse sind in Tabelle 1 zusammengestellt.

Verwendet man anstelle der in den Beispielen 1 bis 4 angegebenen Gemische solche von α-Tocopherol und Glycerinmono-, -die- und -tristearat, Glycerindipalmitat, Glycerinmonolinolat, Glycerinmono-12-hydroxyoctadecanat, Glycerinmono- oder -di-12-hydroxystearat, so erhält man ganz ähnliche Ergebnisse.

Tabelle 1: Verarbeitungsstabilität und Farbqualität in PP

| Beispiel | Stabilisatorgemisch Komponente (a) | (b) | Konz.: Gew.-% bez. auf PP | Verhältnis (a):(b) Gew.-Teile | Schmelzindex MFI $MFI_1$ | $MFI_8$ | Yellowness-Index $YI_1$ | $YI_8$ | Bemerkungen |
|---|---|---|---|---|---|---|---|---|---|
| 1 | (I) | Glycerindioleat | 0,1 | 1:6 | 4,1 | 4,7 | 0,7 | 3,7 | |
| 2 | (I) | Glycerindioleat | 0,1 | 1:10 | 4,1 | 4,7 | 0,7 | 3,6 | |
| 3 | (I) | Glycerinmonooleat | 0,1 | 1:6 | 4,3 | 4,9 | 0,8 | 3,9 | |
| 4 | (I) | Glycerinmonooleat | 0,1 | 1:10 | 4,3 | 5,0 | 0,7 | 3,8 | |
| 5 (Vergleich) | (I) | Trisnonylphenylphosphit | 0,1 | 1:6 | 4,2 | 4,8 | 0,6 | 3,4 | ) nach DE-OS ) 36 34 531 |
| 6 (Vergleich) | (I) | Trisnonylphenylphosphit | 0,1 | 1:10 | 4,2 | 4,9 | 0,7 | 3,6 | ) ) |
| 7 (Vergleich) | (I) | Tetrakis(2,4-di-tert.-butyl-phenyl)-4,4'-biphenyl-di-phosphonit | 0,1 | 1:6 | 4,3 | 5,9 | 0,6 | 3,1 | ) ) |

Beispiele 8 bis 11

Die in der Tabelle 2 angegebenen Stabilisatorgemische wurden im Exsikkator bei einer relativedn Luftfeuchte von 98 % und einer Temperatur von 22 °C gelagert. Nach 5, 10, 15 und 20 Tagen wurde die

Gewichtszunahme bestimmt. Die Meßergebnisse sind in Tabelle 2 in %, bezogen auf (a) + (b), angegeben.

Tabelle 2

| Wasseraufnahme | | | | | | |
|---|---|---|---|---|---|---|
| Beispiel | Stabilisatorgemisch aus Beispiel | Wasseraufnahme in Gew.-% nach | | | | |
| | | 0 | 5 | 10 | 15 | 20 |
| | | **Tagen** | | | | |
| 8[1)] | 4 | 0 | 0,8 | 1,5 | 2,1 | 2,5 |
| 9[1)] | 2 | 0 | 0,2 | 0,4 | 0,6 | 0,7 |
| 10[2)] | 5 | 0 | 13,0 | 18,5 | 24,5 | 29,5 |
| 10[2)] | 7 | 0 | 4,0 | 6,5 | 7,5 | 8,5 |

[1)] Erfindungsgemäß
[2)] Vergleich gemäß DE-OS 36 34 531

## Patentansprüche

**1.** Stabilisatorgemische zur Stabilisierung von Kunststoffen, bestehend aus
a) $\alpha$-Tocopherol der Formel (I)

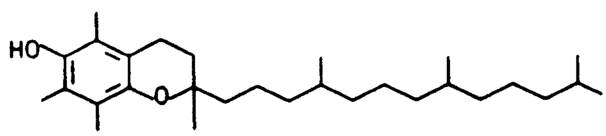

(I)

b) Glycerinmono-, -di- und/oder -triestern von gesättigten oder ungesättigten Fettsäuren oder Gemischen davon, wobei das Verhältnis (a):(b) = 1:5 bis 1:14 Gewichtsteile beträgt.

**2.** Stabilisatorgemische gemäß Anspruch 1, enthaltend als (b) Partialester des Glycerins mit gesättigten $C_{14}$-$C_{18}$-Fettsäuren, mit einfach oder mehrfach ungesättigten $C_{14}$-$C_{18}$-Fettsäuren, mit 12-Hydroxyoctadecensäure oder mit 12-Hydroxyoctadecansäure oder Gemische dieser Partialester.

**3.** Stabilisatorgemische gemäß Anspruch 1 oder 2, dadurch gekennzeichnet, daß das Verhältnis (a):(b) = 1:6 bis 1:10 Gewichtsteile beträgt.

**4.** Kunststoffe enthaltend 0,05 bis 5,0 Gewichtsprozent, bezogen auf das zu stabilisierende Material, eines Stabilisatorgemischs gemäß Ansprüchen 1, 2 oder 3.

## Claims

**1.** A stabilizer mixture for stabilizing plastics, comprising
a) $\alpha$-tocopherol of the formula (I)

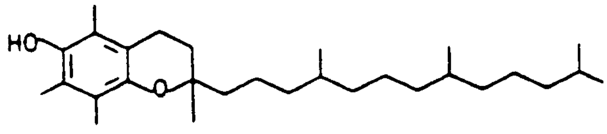

(I)

b) a glycerol monoester, diester and/or triester of a saturated or unsaturated fatty acid, or a mixture thereof, the (a):(b) ratio being from 1:5 to 1:14 parts by weight.

2. A stabilizer mixture as claimed in claim 1, containing, as (b), a partial ester of glycerol with a saturated $C_{14}$-$C_{18}$-fatty acid, with a mono- or polyunsaturated $C_{14}$-$C_{18}$-fatty acid, with 12-hydroxyoctadecenoic acid or with 12-hydroxydecanoic acid, or a mixture thereof.

3. A stabilizer mixture as claimed in claim 1 or 2, wherein the (a):(b) ratio is from 1:6 to 1:10 parts by weight.

4. A plastic containing from 0.05 to 5.0 percent by weight, based on the material to be stabilized, of a stabilizer mixture as claimed in claim 1, 2 or 3.

**Revendications**

1. Mélanges stabilisateurs destinés à la stabilisation de matières plastiques, qui se composent
   a) d'alpha-tocophérol de la formule (I)

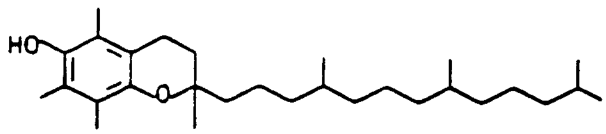

(I)

   b) de monoesters, diesters et/ou triesters de la glycérine d'acides gras saturés ou insaturés ou de leurs mélanges, où le rapport (a):(b) = 1:5 à 1:14 parties en poids.

2. Mélanges stabilisateurs suivant la revendication 1, qui contiennent, à titre de composant (b), des esters partiels de la glycérine avec des acides gras saturés en $C_{14}$ à $C_{18}$, avec des acides gras monoinsaturés ou polyinsaturés en $C_{14}$ à $C_{18}$, avec l'acide 12-hydroxyoctadécanoïque,ou avec l'acide 12-hydroxyoctadécanoïque, ou des mélanges de ces esters partiels.

3. Mélanges stabilisateurs suivant la revendication 1 ou 2, caractérisés en ce que le rapport (a):(b) = 1:6 à 1:10 parties en poids.

4. Matières plastiques qui contiennent de 0,05 à 5,0% en poids, par rapport à la matière stabilisante, d'un mélange stabilisateur suivant les revendications 1, 2 ou